# EUROPEAN PATENT SPECIFICATION

(11) **EP 0 864 552 B1**
(45) Date of publication and mention of the grant of the patent: **05.12.2001**
(21) Application number: 98200754.4
(22) Date of filing: 09.03.1998
(51) Int. Cl.: C05F 17/02

(54) **A composting device and a method for composting.**
Vorrichtung und Verfahren zum Kompostieren organischer Abfälle
Installation et procédé de compostage

(30) Priority: 14.03.1997 SE 9700951
(43) Date of publication of application: 16.09.1998
(73) Proprietor: Komposticon AB, 331 31 Värnamo (SE)
(72) Inventor: Kurttio, Olavi, 331 95 Värnamo (SE)
(74) Representative: Wallengren, Yngvar

(56) References cited:
- DE-C- 3 844 737
- GB-A- 625 158
- GB-A- 2 297 320
- SE-C- 184 706

## Description

### TECHNICAL FIELD

The present invention relates to a composting device which comprises a container for accommodating the matter which is to be composted or the matter which is undergoing composting - the compost - the container having an infeed opening and a closable discharge opening.

The present invention also relates to a method of composting comprising the steps that, the composting takes place batchwise in one and the same container, the matter which is to be composted, or the matter which is undergoing composting and after-composting - the compost - is moved or permitted to be displaced from an infeed opening to the container to a discharge opening from the container and that the different batches of compost matter in the container are kept discrete from one another by means of movable partitions

### BACKGROUND ART

So-called warm composting pens or bins of greatly varying appearance are previously known for the composting of domestic waste. As a rule, such a composting device consists of a vessel or a bin of plastic, or possibly metal, the vessel or bin preferably being provided with thermal insulation in order for the composting process to continue even during the winter months. In addition, there are provided as a rule openings or valves for air supply to the compost.

When the composting cycle in such a prior art composting device is completed, the whole device must be set aside for after-composting. In practice, at least two separate composting devices are therefore required if these are to be run continuously. Alternatively, the composting device must be emptied, whereupon after-composting takes place elsewhere and under less controlled conditions.

Cold composts are also known in the art for garden waste, these being designed in such a manner that they have two pens or containers disposed side-by-side on the ground and being employed alternatingly.

As regards the method of employing the prior art compost containers, matter which is to be composted is filled into the container until the compost container is full. Agitation of the compost is not uncommon. When the composting container is full, the contents are allowed to after-compost, as a rule without agitation. A new composting cycle is then often commenced in a new container.

While previously known composting devices may possibly function satisfactorily under certain special conditions, they cannot be run continuously. In the case of the warm composting device, this is because of the fact that the necessary after-composting takes place in the composting container proper, and in the case of the simple garden composting device, this is because of two factors, partly the cold during the winter months, and partly the necessity of after-composting.

GB-A-2 297 320 discloses a composting container having vertical series of holes in the walls thereof for receiving pegs which enables a perforated separator plate to be fastened, inside the container, at different vertical locations. The separator plate is used for supporting fresh composting material on top of the separator while the composting material below the separator decreases its volume due to de-composition and is prevented from being compressed by the fresh material thereby to improve the air circulation.

It is not clear from the specification of GB-A-2 297 320 in what way the composting material is removed from the container once the composting process have been finished.

### PROBLEM STRUCTURE

The present invention has for its object to design the composting device intimated by way of introduction and the method for composting such that they may be run continuously without disruption all the year round and under controlled and optimum composting conditions.

### SOLUTION

The object forming the basis of the present invention will be attained if the composting device intimated by way of introduction is characterized in that the interior of the container is dividable into at least a first and a second section by means of at least one separation device, and that there are disposed, at the discharge opening, locking means retaining a separation device when the discharge opening is open.

As regards the method for composting, the object forming the basis of the present invention will be attained if the method is characterized in that after removal of one partition and a batch of ready-composted matter, the next partition is retained in place at the discharge opening of the container and the discharge opening is closed.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a simplified vertical cross section through a composting device designed according to the present invention and intended, for example, for use in rental premises; and
- Figs. 2-7: each show only the inner container in the composting device of Fig. 1, this container being located in different stages in an operational cycle.

### DESCRIPTION OF PREFERRED EMBODIMENT

In its most generic form, the present invention entails that the composting takes place batchwise in a single container, the matter which is to be composted or which is undergoing composting - the compost - being moved or allowed to be moved from an infeed opening to the container to a discharge opening from the container. The various batches of compost, for example two or three simultaneously in the container, are kept discrete from one another by means of movable separation devices in the form of partitions, screw threads, compartments etc. On its passage through the container, preferably from the top and downwards, the compost is ventilated by means of ventilation devices in the form of apertures in the walls of the container. After complete composting of a batch of compost, this is removed from the container and also a separation device from the container via a discharge opening in the container.

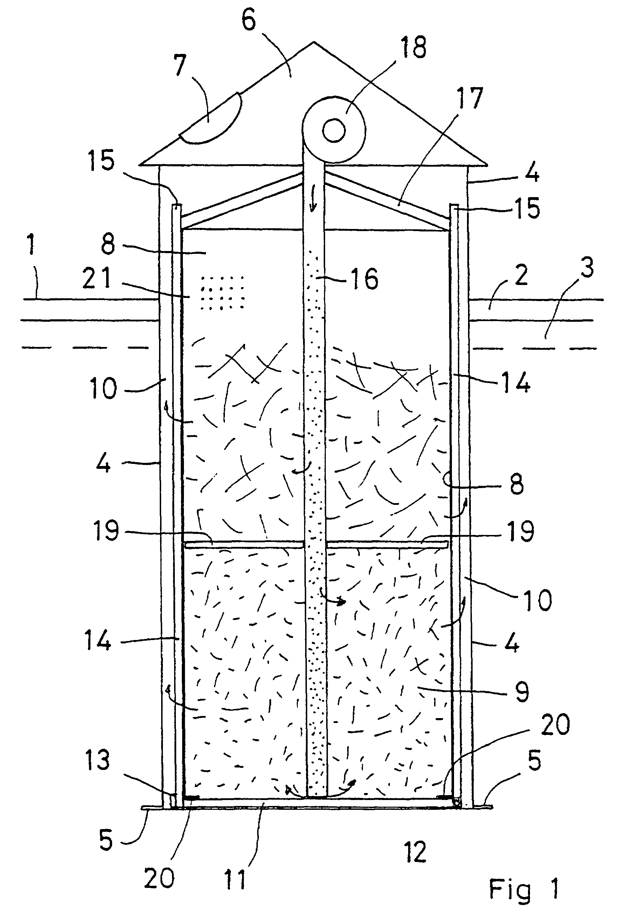

The Drawing shows one example of a composting device for carrying out the above-outlined general composting process. In Fig. 1, reference numeral 1 relates to the ground surface, reference numeral 2 relates to a layer of loam, and reference numeral 3 relates to a layer of thermal insulation. The composting device proper comprises an outer vessel 4 which may consist of any suitable material such as sheet metal, plastic, concrete or the like. Preferably, the outer vessel is sunk into the ground to a considerable proportion of its height. The outer vessel is tight so as to prevent water from outside running into the outer vessel, and has at least one radially projecting flange or abutment 5 for preventing the outer vessel from being lifted by the water table or ground water. Suitably, this flange 5 may be disposed at the bottom of the outer vessel. An upper portion of the outer vessel may possibly be provided with surrounding thermal insulation, preferably down to frost-free depth.

At the top, the vessel 4 is closed by means of a lid 6, which has an openable and closable infeed hatch 7. The lid 6 may possibly include thermal insulation and may possibly also be provided with one or more valves for ventilation or air supply.

Interiorly in the outer vessel 4, the composting device has an inner container 8 which is intended for accommodating the matter 9 which is to be composted. The inner container 8 is exteriorly somewhat smaller than the inner dimensions of the outer vessel 4, such that an air gap 10 is formed between the inside of the outer vessel 4 and the outside of the inner container. The purpose of this air gap is twofold: partly to contribute to a thermal insulation, and partly to provide the matter 9 undergoing composting with air, i.e. to ventilate it. Thus, the inner container 8 may have means which will be described in greater detail hereinbelow for admitting air to the matter 9 which is to be composted. Such air supply is facilitated if the gap 10 is placed under excess pressure.

The inner container 8 has a bottom 11 which rests on the bottom of the outer vessel 4 and which is openable, preferably via a hinge or pivot 12 and a locking mechanism 13. The bottom 11 is manufactured from a system of steel profiles such that the bottom will have the requisite mechanical strength to be able to carry all of the contents of the inner container 8. A panel which rests on the above-mentioned profile system answers for the tightness of the bottom 11. The panel may, for example be manufactured from the same plastic material as the inner container 8.

As an alternative, the panel 19 and profile system may be dispensed with, in which event the bottom of the outer vessel 4 rests against the lower edge of the inner container 8 and seals against it.

The hinge 12 and the locking mechanism 13 are secured in the lower end portions of vertical beams or profiles 14 which, in their upper ends, have lifting lugs 15. After dismounting of the lids 6 of the outer vessel 4, it is thus possible to lift up the entire inner container 8 with the aid of the above-mentioned beams and lifting lugs 15. In such instance, the entire contents of the container will rest on the carrying bottom 11.

In order to accommodate several batches of compost 9 at the same time, suitably two to four batches, the inner container 8 is elongate in the direction of movement of the batches of compost. It will be apparent from the Drawing that the composting device is of greater extent in the vertical direction than in the horizontal direction. Suitably, the compost container will be approximately twice as high as its diameter, possibly even higher.

In order to satisfy air supply to the compost in the container 8, the inner container has a central tube 16 with a number of apertures or perforations. The tube 16 is, at its upper end, secured in stays 17 which, in their turn, are secured in the vertical beams 14 in the region of the lifting lugs 15. The bottom 11 may possibly be provided, on its inside, with means for centring the lower end of the tube 16. Further, the inner container is provided with a number of apertures, or is possibly perforated so as also to permit ventilation by this route (intimated at 21 in Fig. 1). The apertures or perforations extend over the major part of the vertical extent of the container.

In order, despite the considerable vertical extent of the composting device, to ensure a satisfactory air supply to the matter 9 right down to the bottom of the composting device, the upper end of the tube 16 is connected to a fan 18. Possibly, the fan 18 may also be disposed to force down air via channels on the inside or outside of the inner container 8, this air being forced in through the apertures in the inner container. In this context, the entire gap 10 may function as such a channel.

It will be apparent from Fig. 1 that the matter 9 in the composting device is divided in the vertical direction into two batches by means of a partition 19 which is in the form of a panel with a number of openings, but preferably perforations. The partition 19 is designed in such a manner that it is movable in the vertical direction internally in the inner container 8 and so that it may move along the tube 16 in the vertical direction. Suitably, the partition is split or has an openable device by means of which it may be engaged about the tube 16 when, for example, the lid 6 has been dismounted.

In Fig. 1, only one partition has been included in the Drawing, but as was intimated above and as will be more clearly apparent below, at least two, but possibly even three or more partitions are required according to the present invention for continuous operation of the composting device.

The basic concept underlying the employment of the partition 19 is that the lower region of the inner container 8 is first filled with matter 9 which is to be composted. When the container is only partly filled, a first partition 19 is placed above the compost matter, whereafter new matter is laid on the upper side of the partition and a new composting cycle is commenced. In such instance, the composted matter 9 beneath the partition 19 will undergo an after-composting, at the same time as a new compost is started on the upper side of the partition. The generation of heat in the lower compost - preferably after-compost - is sufficient even during the winter months to ensure satisfactory composting in the upper fraction. In this instance, the ventilation also assists in transporting and distributing heat in the vertical direction.

As was intimated above, solutions are conceivable in which the inner container 8 is divided into more than two sections in the vertical direction, for example three or four.

When the composting device according to Fig. 1 is emptied, the lid 6 is dismounted, whereafter the inner container 8 is lifted up. The container suspended from a lorry crane and, for example, positioned over a lorry load carrying platform, the locking mechanism 18 is opened so that the compost 9 in the lower section or compartment of the container is emptied out via the openable bottom 11.

At the lower edge portion of the inner container 8, there are provided locking means 20 which prevent the partition 19 from falling out of the lower end of the inner container once the compost 9 beneath the partition has been emptied out. These locking means may, for example, be in the form of U-shaped stirrups or yokes which are passed through openings, possibly provided with metal reinforcements, in a lower edge region of the inner container 8.

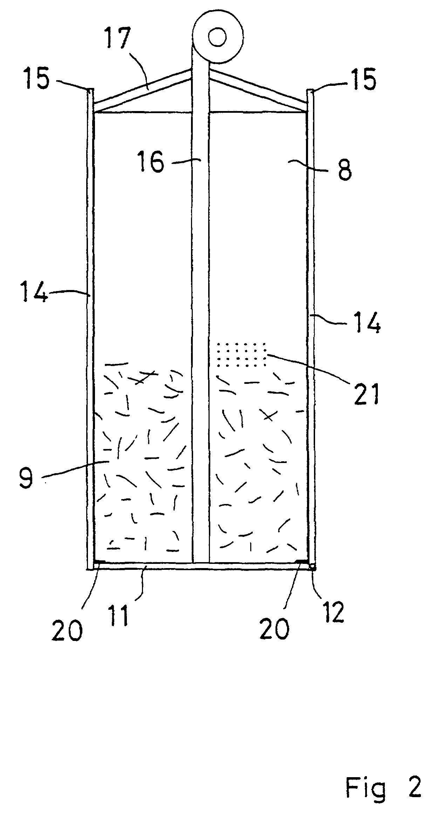

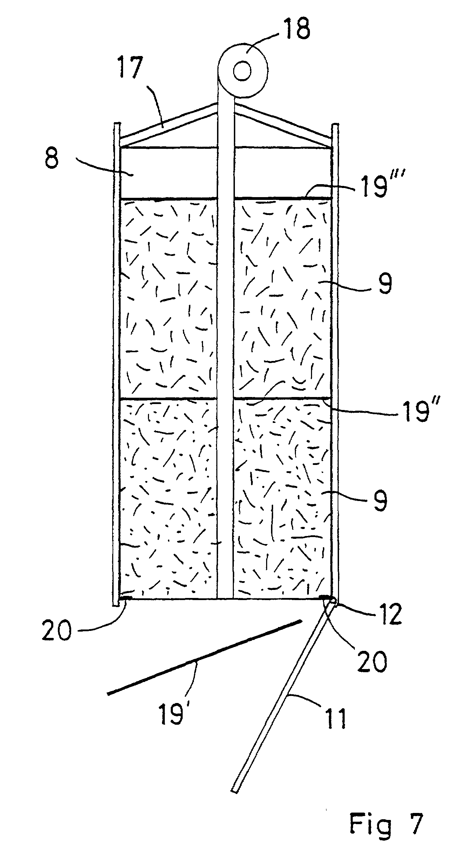

A more detailed description of the composting process proper will now be given below with reference to Figs. 2 - 7.

Fig. 1 shows the inner container proper separately and partly filled with matter 9 which is to be composted. The bottom 11 is dosed and locked and the inner container is located sunk into the outer vessel 4.

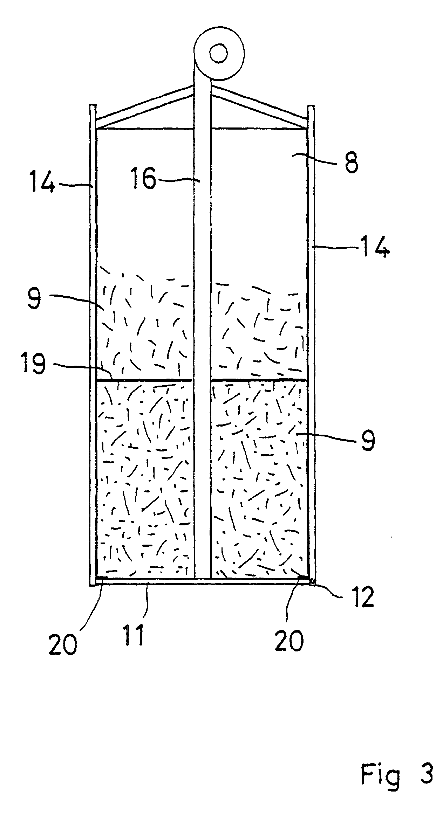

When the inner container 8 has been partly filled, approximately halfway (or, when the container 8 is to house three batches, approximately to one third) a partition 19 is applied about the tube 16 and allowed to fall down such that it rests on the compost. Further compost matter 9 is added on the upper side of this partition and a new composting cycle is started in this matter (see Fig. 3). The compost on the upper side of the partition 19 needs to be turned or agitated intermittently, which, on the other hand, is not the case for the compost 9 beneath the partition, since this compost is now undergoing after-composting.

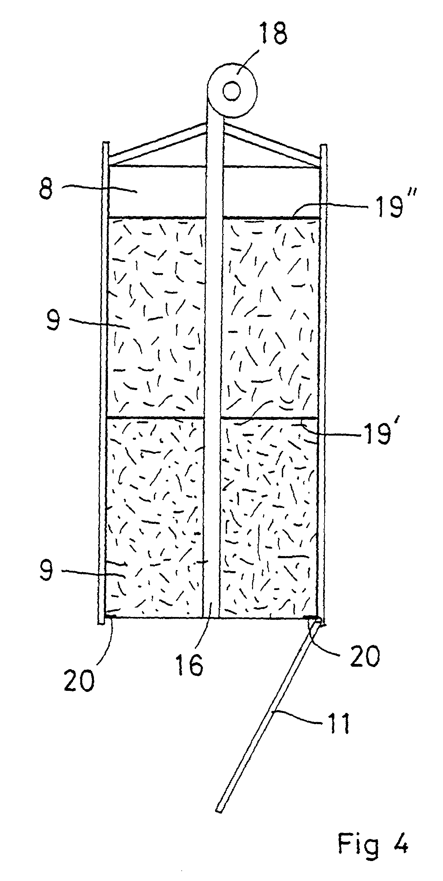

Once the upper section of the inner container 8 has also been filled, an additional partition (see Fig. 4) is placed above the compost in the upper section in the container. This latter partition has been given reference numeral 19" in Fig. 4, while the original partition has been given reference numeral 19'.

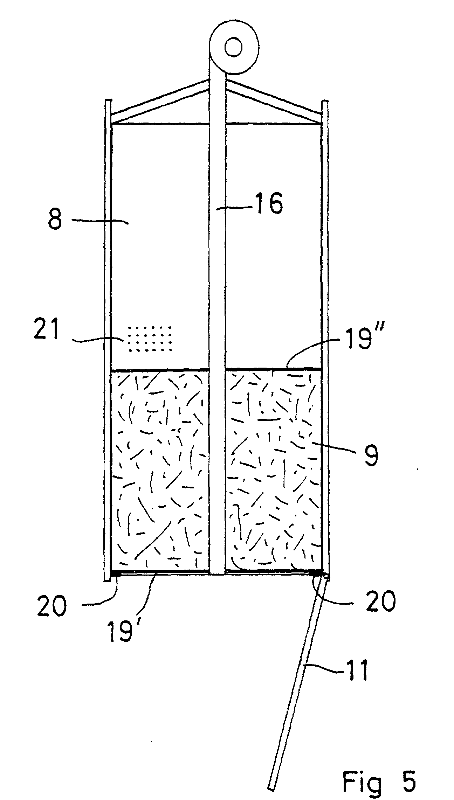

With the inner container 8 raised, the bottom 11 is then opened (see Fig. 4), the finished, after-composted matter falling out in a vertical direction. At the same time, both of the partitions 19' and 19" are displaced downwards, the lower partition 19' being prevented from falling out under the action of the above-mentioned locking means 20. Once the lower partition 19' has arrived on these locking means (see Fig. 5), the bottom hatch 11 is once again closed and the outer container 8 is lifted down into the inner vessel 4. Prior to closure of the bottom hatch 11, the composting device is of the appearance which is apparent from Fig. 5. It will be particularly clearly apparent that the lower partition 19' rests in a position immediately above the bottom edge of the inner container 8.

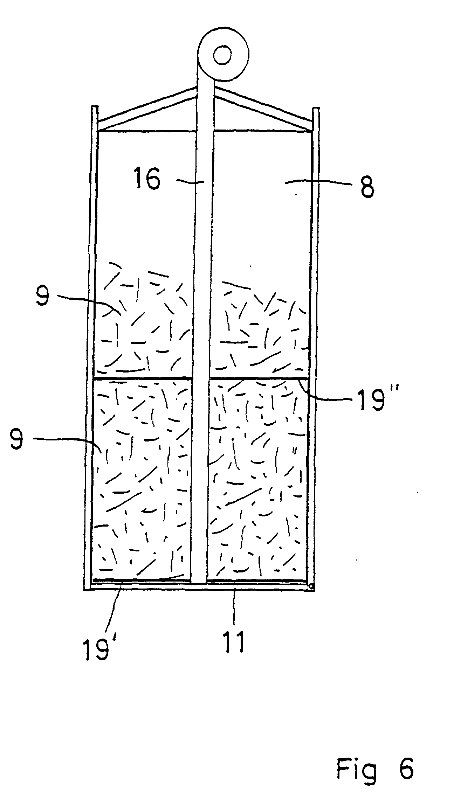

In Fig. 6, new composting matter 9 has begun to be filled onto the upper side of the upper partition 19" and a new composting cycle has been started in this matter. When the upper section of the container 8 has also been filled to a suitable height, a third partition 19"' is placed on the upper side of the compost and the inner container 8 is removed from the outer vessel 4. In a suitable position above, for example, the load carrying platform of a lorry, the bottom 11 is opened, whereafter the locking means 20 are removed so that the original partition 19' may fall out together with the compost matter 9 on the underside of the partition 19". After emptying of the fraction between the two partitions 19' and 19", the device will be of the same appearance as shown in 5.

### DESCRIPTION OF ALTERNATIVE EMBODIMENTS

In the foregoing, it has been presupposed that the composting device comprises an outer vessel in which an inner container 8 is insertable. However, according to the present invention, it is entirely possibly to dispense with the outer vessel 4 and instead place the container 8 on a suitable hard substrate, for example a concrete slab. In this embodiment, the container 8 possesses per se the requisite thermal insulation, possibly with the exception of the bottom 11, where insulation may alternatively be placed beneath the support slab. Furthermore, the support slab should be positioned somewhat above the ambient surroundings, and be provided with adequate run-off, in order thereby to prevent water from entering into the container 8.

As a further alternative to the entrenched outer vessel 4, use may be made of an outer casing or a building with thermal insulation in order to prevent or reduce heat losses from the inner container 8.

In the foregoing, one variation of the ventilation of the compost matter was described. Other variations may also be employed, such as a suction fan, the use of several tubes 16, etc.

A description was provided above of one embodiment where the inner container is tall and slim and approximately vertical, with the infeed of the compost matter 9 taking place vertically from above and downwards. However, the present invention also encompasses embodiments in which the direction of movement of the compost matter is the reverse, inclines more or less in relation to the vertical, or is even horizontal.

The partition devices, described above as planar, perforated panels 19, may be of other design and, for example, consist of the threads of a feeder screw, frames or compartments which are displaceable within the container 8, etc.

In particular if the inner container is tall, it is possible to provide addition locking means 20 along its vertical extent, these holding one, or possibly more partitions 19 in place in the vertical direction, such that composting matter resting on such a partition does not compact together subjacent fractions.

The present invention may be modified further without departing from the scope of the appended Claims.

## Claims

1. A composting device which comprises a container (8) for accommodating the matter (9) which is to be composted or the matter which is undergoing composting and after-composting - the compost - the container having an infeed opening and a closable discharge opening, **characterized in that** the interior of the container (8) is dividable into at least a first and a second section by means of at least one separation device; and that there are disposed, at the discharge opening, locking means (20) retaining a separation device when the discharge opening is open.

2. The composting device as claimed in Claim 1, **characterized in that** the separation device is a partition (19) which is movable from the region of the infeed opening to the region of the discharge opening.

3. The composting device as claimed in Claim 1 or 2, **characterized in that** said locking means (20) are openable so as to permit withdrawal of the separation device when the discharge opening of the container is open.

4. The composting device as claimed in any of Claims 1 to 3, **characterized in that** the separation device has a number of apertures for air passage.

5. The composting device as claimed in any of Claims 1 to 4, **characterized in that** the container (8) is of greater extent in the direction from infeed opening to the discharge opening than transversely of this direction.

6. The composting device as claimed in any of Claims 1 to 5, **characterized in that** the container (8) is an inner container which is insertable in an outer vessel (4) or an outer casing which is disposed to reduce or prevent heat losses from the container.

7. The composting device as claimed in any of Claims 1 to 6, **characterized in that** the infeed opening is located at an upper portion of the container (8), while the discharge opening is an openable bottom (11) of the container, which, in the vertical direction, is of approximately constant cross section.

8. The composting device as claimed in Claim 7, **characterized in that** the container (8) has a centrally placed, perforated tube (16) for air supply to the compost matter (9); **and that** the partition (19) has a corresponding opening to permit movement of the partition (19) down along the tube.

9. The composting device as claimed in Claim 8, **characterized in that** the tube (16) is in communication with a device (18) for the supply of air under pressure.

10. The composting device as claimed in any of Claims 7 to 9, **characterized in that** said locking means (20) are disposed at the lower edge of the container (8).

11. The composting device as claimed in any of Claims 8 or 9, **characterized in that** said locking means are disposed at the lower end of the tube (16).

12. The composting device as claimed in any of Claims 8 to 11, **characterized in that** the partition (19) is divisible or openable so as to be able to be applied about the tube (16).

13. A method of composting, comprising the steps that, the composting takes place batchwise in one and the same container, the matter (9) which is to be composted, or the matter which is undergoing composting and after-composting - the compost - is moved or permitted to be displaced from an infeed opening to the container to a discharge opening from the container and that the different batches of compost matter (9) in the container are kept discrete from one another by means of movable partitions (19), **characterized in that** after removal of one partition (19') and a batch of ready-composted matter, the next partition (19") is retained in place at the discharge opening of the container (8) and the discharge opening (11) is closed.

14. The method as claimed in Claim 13, **characterized in that** the displacement of the compost matter (9) takes place from above and downwards.

15. The method as claimed in any of Claims 13 or 14, **characterized in that** both the ready-composted matter (9) and the partitions (19) are removed via the discharge opening (11) of the container.

16. The method as claimed in any of Claims 13 to 15, **characterized in that** air under pressure is supplied to the compost matter (9).

## Revendications

1. Dispositif de compostage qui comprend un récipient (8) pour contenir la matière (9) qu'on veut composter ou la matière qui est en cours de compostage et de post-compostage - le compost- le récipient ayant un orifice d'introduction et un orifice d'évacuation obturable, **caractérisé en ce que** l'intérieur du récipient (8) peut être divisé en au moins une première et une deuxième partie au moyen d'au moins un dispositif de séparation ; et **en ce que** des moyens de verrouillage (20), qui retiennent un dispositif de séparation lorsque l'orifice d'évacuation est ouvert, sont prévus à l'orifice d'évacuation.

2. Dispositif de compostage selon la revendication 1, **caractérisé en ce que** le dispositif de séparation est une cloison (19) qui est déplaçable de la région de l'orifice d'introduction à la région de l'orifice d'évacuation.

3. Dispositif de compostage selon la revendication 1 ou 2, **caractérisé en ce qu'**on peut ouvrir les dits moyens de verrouillage (20) pour permettre l'enlèvement du dispositif de séparation lorsque l'orifice d'évacuation du récipient est ouvert.

4. Dispositif de compostage selon une quelconque des revendications 1 à 3, **caractérisé en ce que** le dispositif de séparation comporte une pluralité de trous pour le passage d'air.

5. Dispositif de compostage selon une quelconque des revendications 1 à 4, **caractérisé en ce que** le récipient (8) est plus grand dans la direction allant de l'orifice d'introduction à l'orifice d'évacuation que transversalement à cette direction.

6. Dispositif de compostage selon une quelconque des revendications 1 à 5, **caractérisé en ce que** le récipient (8) est un récipient intérieur qui est insérable dans une cuve extérieure (4) ou une chemise extérieure qui est disposée de manière à réduire ou empêcher les pertes de chaleur du récipient.

7. Dispositif de compostage selon une quelconque des revendications 1 à 6, **caractérisé en ce que** l'orifice d'introduction est situé dans une région supérieure du récipient (8), tandis que l'orifice d'évacuation est un fond ouvrant (11) du récipient, qui a une section transversale sensiblement constante dans la direction verticale.

8. Dispositif de compostage selon la revendication 7, **caractérisé en ce que** le récipient (8) comporte un tube perforé placé centralement (16) pour la fourniture d'air à la matière en compostage (9) ; et **en ce que** la cloison (19) comporte un trou correspondant pour permettre le mouvement de descente de la cloison (19) le long du tube.

9. Dispositif de compostage selon la revendication 8, **caractérisé en ce que** le tube (16) est en communication avec un dispositif (18) pour la fourniture d'air sous pression.

10. Dispositif de compostage selon une quelconque des revendications 7 à 9, **caractérisé en ce que** les dits moyens de verrouillage (20) sont placés au bord inférieur du récipient (8).

11. Dispositif de compostage selon une quelconque des revendications 8 ou 9, **caractérisé en ce que** les dits moyens de verrouillage sont placés au bord inférieur du tube (16).

12. Dispositif de compostage selon une quelconque des revendications 8 à 11, **caractérisé en ce que** la cloison (9) peut être divisée ou ouverte afin qu'on puisse l'appliquer autour du tube (16).

13. Procédé de compostage, comprenant les étapes suivantes:
exécution du compostage par cuvées dans un seul et même récipient, la matière (9) qui doit être compostée ou la matière qui subit un compostage et un post-compostage - le compost - étant déplacée ou pouvant se déplacer d'un orifice d'introduction dans le récipient à un orifice d'évacuation du récipient ; et
maintien des différentes cuvées de matière de compostage (9) dans le récipient séparées les unes des autres au moyen de cloisons mobiles (19) ;
**caractérisé en ce que**, après enlèvement d'une cloison (19') et d'une cuvée de matière déjà compostée, la cloison suivante (19") est retenue en place à l'endroit de l'orifice d'évacuation du récipient (8) et l'orifice d'évacuation (11) est fermé.

14. Procédé selon la revendication 13, **caractérisé en ce que** le déplacement de la matière de compostage (9) a lieu à partir du haut et vers le bas.

15. Procédé selon une quelconque des revendications 13 ou 14, **caractérisé en ce qu'**on enlève à la fois la matière déjà compostée (9) et les cloisons (19) à travers l'orifice d'évacuation (11) du récipient.

16. Procédé selon une quelconque des revendications 13 à 15, **caractérisé en ce que** de l'air sous pression est fourni à la matière à composter.

## Patentansprüche

1. Eine Kompostierungsvorrichtung umfassend einen Behälter (8) zur Aufnahme des Materials (9) welches kompostiert werden soll oder des Materials welches der Kompostierung und Nach-Kompostierung unterzogen wird - der Kompost - wobei der Behälter eine Beschickungsöffnung und eine verschließbare Auslaßöffnung umfaßt, **dadurch gekennzeichnet, daß** das Innere des Behälters (8) in wenigstens einen ersten und einen zweiten Abschnitt unterteilbar ist, mittels wenigstens einer Trennvorrichtung; und dadurch, daß an der Auslaßöffnung Verschlußeinrichtungen (20) angeordnet sind, welche eine Trennvorrichtung zurückbehalten, wenn die Auslaßöffnung geöffnet ist.

2. Kompostierungsvorrichtung nach Anspruch 1, **dadurch gekennzeichnet, daß** die Trennvorrichtung ein Abschnitt (19) ist, von dem Bereich der Beschickungsöffnung zu dem Bereich der Auslaßöffnung welcher beweglich ist.

3. Kompostierungsvorrichtung nach Anspruch 1 oder 2, **dadurch gekennzeichnet, daß** die Verschlußeinrichtungen (20) entriegelbar sind, um so das Entfernen der Trenneinrichtung zu ermöglichen, wenn die Auslaßöffnung des Behälters offen ist.

4. Kompostierungsvorrichtung nach einem der Ansprüche 1 bis 3, **dadurch gekennzeichnet, daß** die Trenneinrichtung eine Anzahl von Öffnungen aufweist, um einen Luftdurchtritt zu ermöglichen.

5. Kompostierungsvorrichtung nach einem der Ansprüche 1 bis 4, **dadurch gekennzeichnet, daß** der Behälter (8) in Richtung von der Beschickungsöffnung zu der Auslaßöffnung eine größere Erstreckung hat als senkrecht zu dieser Richtung.

6. Kompostierungsvorrichtung nach einem der Ansprüche 1 bis 5, **dadurch gekennzeichnet, daß** der Behälter (8) ein innerer Behälter ist, welcher einsetzbar ist in einen äußeren Behälter (4) oder ein äußeres Gehäuse, welches geeignet ist, Wärmeverluste aus dem Behälter zu reduzieren oder zu verhindern.

7. Kompostierungsvorrichtung nach einem der Ansprüche 1 bis 6, **dadurch gekennzeichnet, daß** die Beschickungsöffnung sich am oberen Abschnitt des Behälters (8) befindet, während die Auslaßöffnung ein zu öffnender Boden (11) des Behälters ist, welcher, in vertikaler Ausrichtung, einen im Wesentlichen gleichmäßigen Querschnitt aufweist.

8. Kompostierungsvorrichtung nach Anspruch 7, **dadurch gekennzeichnet, daß** der Behälter (8) eine zentral angeordnete, perforierte Röhre (16) zur Luftversorgung des zu kompostierenden Materials (9) aufweist; und dadurch, daß der Abschnitt (19) eine korrespondierende Öffnung aufweist, um die Bewegung des Abschnittes (19) abwärts entlang der Röhre zu ermöglichen.

9. Kompostierungsvorrichtung nach Anspruch 8, **dadurch gekennzeichnet, daß** die Röhre (16) mit einer Einrichtung (18) zur Versorgung mit unter Druck stehender Luft kommuniziert.

10. Kompostierungseinrichtung nach einem der Ansprüche 7 bis 9, **dadurch gekennzeichnet, daß** die Verschlußeinrichtungen (20) an der unteren Kante des Behälters (8) angeordnet sind.

11. Kompostierungsvorrichtung nach einem der Ansprüche 8 oder 9, **dadurch gekennzeichnet, daß** die Verschlußeinrichtungen an dem unteren Ende der Röhre (16) angeordnet sind.

12. Kompostierungseinrichtung nach einem der Ansprüche 8 bis 11, **dadurch gekennzeichnet, daß** der Abschnitt (19) teilbar oder zu öffnen ist, um so in der Lage zu sein an die Röhre (16) angewandt zu werden.

13. Ein Verfahren zum Kompostieren, umfassend die Schritte, daß die Kompostierung batchweise in einem Behälter stattfindet, das Material (9) welches zu kompostieren ist, oder das Material welches der Kompostierung und Nach-Kompostierung unterzogen wird - der Kompost -, bewegt wird oder ihm erlaubt wird von einer Beschickungsöffnung des Behälters zu einer Auslaßöffnung des Behälters bewegt zu werden und daß die unterschiedlichen Batches des Kompostmaterials (9) in dem Behälter jeweils untereinander getrennt sind, mittels der Einrichtungen von beweglichen Abschnitten (19), **dadurch gekennzeichnet, daß** nach der Entfernung eines Abschnittes (19') und eines Batches von fertig-kompostiertem Material der nächste Abschnitt (19") an der Auslaßöffnung des Behälters (8) zurückbehalten wird und die Auslaßöffnung (11) geschlossen ist.

14. Verfahren nach Anspruch 13, **dadurch gekennzeichnet, daß** die Verschiebung des Kompostmaterials (19) von oben nach unten stattfindet.

15. Verfahren nach einem der Ansprüche 13 oder 14, **dadurch gekennzeichnet, daß** sowohl das fertig-kompostierte Material (9) und die Abschnitte (19) durch die Auslaßöffnung (11) des Behälters entfernt werden.

16. Verfahren nach einem der Ansprüche 13 bis 15, **dadurch gekennzeichnet, daß** Luft unter Druck zu dem Kompostmaterial (9) hinzugefügt wird.
